# EUROPEAN PATENT APPLICATION

(11) **EP 0 864 954 A1**
(43) Date of publication of application: **16.09.1998**
(21) Application number: 97301571.2
(22) Date of filing: 10.03.1997
(51) Int. Cl.: G05D 23/13

(54) **Automatic water temperature control device for a mixing type water valve**

(71) Applicant: Huang, Tien-Tsai, Pan-Chiao City, Taipei Hsien (TW)
(72) Inventor: Huang, Tien-Tsai, Pan-Chiao City, Taipei Hsien (TW)
(74) Representative: Jackson, Peter Arthur

(57) **Abstract**

An automatic water temperature control device for a mixing-type water valve (1) includes a rotation control unit (2), a temperature sensor (3) and a driver control unit (4). The rotation control unit (2) includes a driver (22) that is coupled operably to an operating shaft (151) of the water valve (1) for driving rotatably the latter. The temperature sensor (3) is mounted on a valve housing (10) of the water valve (1) and generates an actual temperature signal corresponding to actual temperature of water flowing through a mixed water outlet (13) of the valve housing (10) . The driver control unit (4) includes a temperature setting unit (43) operable so as to set a desired water temperature and so as to generate a reference temperature signal corresponding to the desired water temperature, and a processor (44) which compares the actual temperature signal with the reference temperature signal and which activates the driver (22) to drive rotatably the operating shaft (151) to control the amounts of cold and hot water flowing from cold and hot water inlets (11, 12) to the mixed water outlet (13) until the actual temperature of the water flowing through the mixed water outlet (13) reaches the desired water temperature.

## Description

The invention relates to a water temperature control device, more particularly to an automatic water temperature control device for a mixing-type water valve.

The control of hot and cold water flow to obtain water of a desired temperature is currently conducted in any one of the following manners:
1. Each of the hot and cold water supplies has a respective output port that is in fluid communication with a mixed water outlet. In addition, each of the hot and cold water supplies has a respective control valve to control the amounts of hot and cold water flowing through the mixed water outlet.
2. A mixing-type water valve has input ports connected to hot and cold water supplies, and an output port that serves as a mixed water outlet. The water valve has a rotatable lever which is operated so as to control the amounts of hot and cold water flowing through the output port.
3. In another kind of mixing-type water valve, the rotatable lever is further pivotable upwardly and downwardly to control the amount of mixed water flowing through the output port.

It is noted that the aforementioned manners of water flow control are conducted manually, thereby arising in the following drawbacks:
1. It is difficult to obtain mixed water of the desired temperature by manual control.
2. The conventional manners of water flow control are not automated and do not provide for the possibility of remote control.
3. There is no display unit for indicating the actual temperature of the mixed water output.

The main object of the present invention is to provide an automatic water temperature control device which permits automated operation of a mixing-type water valve to facilitate adjustment of the temperature of water flowing through the mixing-type water valve.

Another object of the present invention is to provide an automatic water temperature control device with a display unit for displaying the actual temperature of the water flowing through the mixing-type water valve.

A further object of the present invention is to provide an automatic water temperature control device which can be operated by remote control.

Accordingly, the automatic water temperature control device of this invention is to be applied to a mixing-type water valve which includes a valve housing formed with a cold water inlet, a hot water inlet and a mixed water outlet. The water valve further includes a valve piece unit provided in the valve housing and operable so as to control amounts of cold and hot water flowing from the cold and hot water inlets to the mixed water outlet, and an operating unit with an operating shaft that extends into the valve housing and that is coupled to the valve piece unit to permit operation of the valve piece unit. The automatic water temperature control device comprises:
a rotation control unit including a driver that is adapted to be coupled operably to the operating shaft for driving rotatably the operating shaft;
a temperature sensor adapted to be mounted on the valve housing, the temperature sensor generating an actual temperature signal corresponding to actual temperature of water flowing through the mixed water outlet; and
a driver control unit including a temperature setting unit operable so as to set a desired water temperature and so as to generate a reference temperature signal corresponding to the desired water temperature, and processor means electrically connected to the temperature sensor, the driver and the temperature setting unit, the processor means comparing the actual temperature signal with the reference temperature signal and activating the driver to drive rotatably the operating shaft to control the amounts of the cold and hot water flowing from the cold and hot water inlets to the mixed water outlet until the actual temperature of the water flowing through the mixed water outlet reaches the desired water temperature.

Preferably, the driver control unit further includes a display unit electrically connected to and controlled by the processor means so as to display the actual temperature of the water flowing through the mixed water outlet and the desired water temperature thereon.

In a preferred embodiment, the automatic water temperature control device further comprises a handheld remote controller which includes a processing unit and a user input unit electrically connected to the processing unit and operable so as to set the desired water temperature. The user input unit provides the reference temperature signal corresponding to the desired water temperature to the processing unit when operated. The remote controller further includes a transmitting unit electrically connected to the processing unit for wirelessly transmitting the reference temperature signal. The driver control unit further includes a receiver circuit electrically connected to the processor means for wirelessly receiving the reference temperature signal from the remote controller.

Other features and advantages of the present invention will become apparent in the following detailed description of the preferred embodiments with reference to the accompanying drawings, of which:
Figure 1 is an exploded view of a conventional mixing-type water valve;
Figure 2 is an exploded view illustrating a rotation control unit of the first preferred embodiment of an automatic water temperature control device for the water valve of Figure 1;
Figure 3 is a schematic sectional view illustrating the rotation control unit of Figure 2 when installed on the water valve of Figure 1;
Figure 4 is a schematic circuit block diagram of a driver control unit of the first preferred embodiment;
Figure 5 is a schematic circuit block diagram of a driver control unit of the second preferred embodiment of an automatic water temperature control device according to this invention;
Figure 6 is a schematic view of a remote controller of the second preferred embodiment; and
Figure 7 is a schematic circuit block diagram of the remote controller shown in Figure 6.

Before the present invention is described in greater detail, it should be noted that like elements are denoted by the same reference numerals throughout the disclosure.

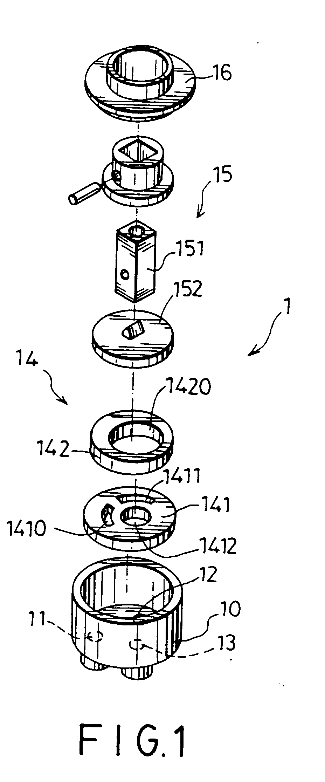

Referring to Figure 1, a conventional mixing-type water valve 1 is shown to include a valve housing 10 formed with a cold water inlet 11, a hot water inlet 12 and a mixed water outlet 13. A valve piece unit 14 is disposed in the valve housing 10 and includes a lower valve piece 141 and an upper valve piece 142. The lower valve piece 141 is formed with a pair of curved slots 1410, 1411 aligned respectively with the cold and hot water inlets 11, 12, and a mixing hole 1412 aligned with the mixed water outlet 13. The upper valve piece 142 is disposed on top of the lower valve piece 141 and is formed with an eccentric opening 1420. An operating unit 15 includes a rotary operating shaft 151 and a coupling plate 152 which couples a lower end of the operating shaft 151 to the upper valve piece 142. A cover 16 closes an open top end of the valve housing 10. By rotating the operating shaft 151, the upper valve piece 142 is correspondingly rotated with respect to the lower valve piece 141 to control the amounts of cold and hot water flowing through the water inlets 11, 12 to the water outlet 13 via the slots 1410, 1411, the eccentric opening 1420 and the mixing hole 1412.

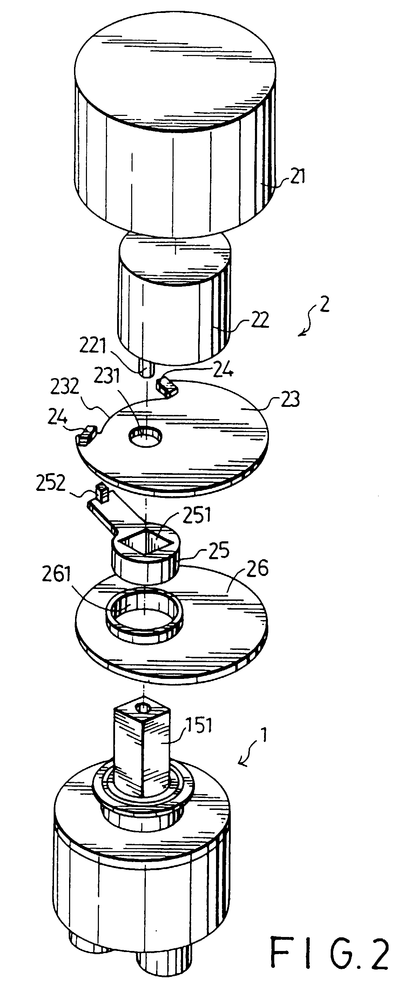

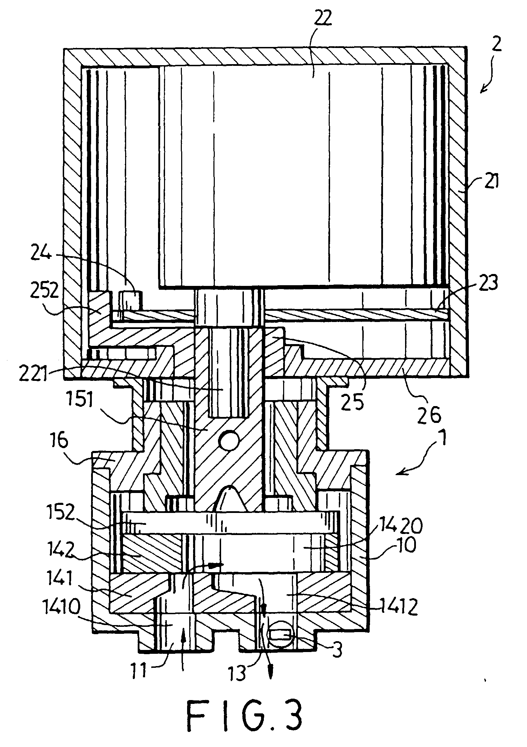

Referring to Figures 2 to 4, the first preferred embodiment of an automatic water temperature control device for a conventional mixing-type water valve, such as that shown in Figure 1, is shown to comprise a rotation control unit 2, a temperature sensor 3 and a driver control unit 4.

The rotation control unit 2 includes a casing 21, a driver 22, a limit plate 23, a limit shaft 25 and a mounting plate 26.

The driver 22, which may be a motor, an electromagnetic valve or the like, is disposed inside the casing 21 and is provided with a downwardly extending drive shaft 221 that is adapted to be coupled operably to a top end of the operating shaft 151 of the water valve 1. The limit plate 23 is disposed inside the casing 21 below the driver 22 and is formed with a shaft hole 231. The drive shaft 221 extends rotatably through the shaft hole 231. The limit plate 23 is further formed with a circumferential notch 232. Each of a pair of limit switches 24 are mounted on the limit plate 23 on a respective end of the circumferential notch 232. The limit shaft 25 is disposed inside the casing 21 below the limit plate 23 and has a first end formed with a coupling hole 251 for sleeving on the operating shaft 151 for co-rotation therewith. The limit shaft 25 further has a second end formed with a switch actuator 252 that extends into the circumferential notch 232 of the limit plate 23. The switch actuator 252 abuts against a corresponding one of the limit switches 24 when the cold or hot water flow is at a maximum amount. Particularly, the cold water flow is at a maximum when the switch actuator 252 abuts against the left one of the limit switches 24, while the hot water flow is at a maximum when the switch actuator 252 abuts against the left one of the limit switches 24. The mounting plate 26 is mounted on an open bottom end of the casing 21 and is formed with a through-hole 261 to permit extension of the first end of the limit shaft 25 and the drive shaft 221 of the driver 22 therethrough.

The temperature sensor 3 is adapted to be mounted in the mixed water outlet 13 of the valve housing 10 of the water valve 1 and generates an actual temperature signal corresponding to the actual temperature of the mixed water flowing through the latter. In this embodiment, the temperature sensor 3 is mounted on a resilient plug which seals a radial hole formed through the mixed water outlet 13.

The driver control unit 4 includes a temperature setting unit 43, a display unit 47, and a processor unit constituted by a signal amplifier 41, an analog-to-digital (A/D) converter 42, a microprocessor 44 and a digital-to-analog (D/A) converter 45.

The signal amplifier 41 is electrically connected to the temperature sensor 3 and amplifies the actual temperature signal therefrom. The A/D converter 42 is electrically connected to the signal amplifier 41 and converts the amplified actual temperature signal into a digitized actual temperature signal. The temperature setting unit 43 is a user input device which is operable so as to set a desired water temperature and which generates a reference temperature signal corresponding to the desired water temperature. The microprocessor 44 is electrically connected to the A/D converter 42 and the temperature setting unit 42 and compares the actual temperature signal with the reference temperature signal. The microprocessor 44 is also electrically connected to the display unit 47 and controls the latter to display the actual water temperature and the desired water temperature thereon. The driver 22 is electrically connected to the D/A converter 45, the latter being electrically connected to the microprocessor 44. Based on the results of the comparison between the actual temperature signal and the reference temperature signal, the microprocessor 44 generates a driver control signal which is converted by the D/A converter 45 into an analog control signal for activating the driver 22. As such, the operating shaft 151 can be driven automatically to control the amounts of cold and hot water flowing from the water inlets 11, 12 to the water outlet 13. The limit switches 24 are electrically connected to the microprocessor 44 and enable the microprocessor 44 to stop further activation of the driver 22 when either of the cold or hot water flow is at a maximum amount.

In operation, the temperature sensor 3 provides the actual temperature signal corresponding to the actual temperature of the mixed water flowing through the water outlet 13 to the signal amplifier 41. The signal amplifier 41 amplifies the actual temperature signal, and the A/D converter 42 converts the amplified actual temperature signal into the digitised actual temperature signal. The microprocessor 44 compares the actual temperature signal with the reference temperature signal from the temperature setting unit 43. If the actual water temperature is higher than the desired water temperature, the microprocessor 44 controls the driver 22 via the D/A converter 45 to rotate the operating shaft 151 so as to increase the cold water flow and decrease the hot water flow until the actual water temperature is equal to the desired water temperature. If the actual water temperature is lower than the desired water temperature, the microprocessor 44 controls the driver 22 via the D/A converter 45 to rotate the operating shaft 151 in the opposite direction so as to increase the hot water flow and decrease the cold water flow until the actual water temperature is equal to the desired water temperature.

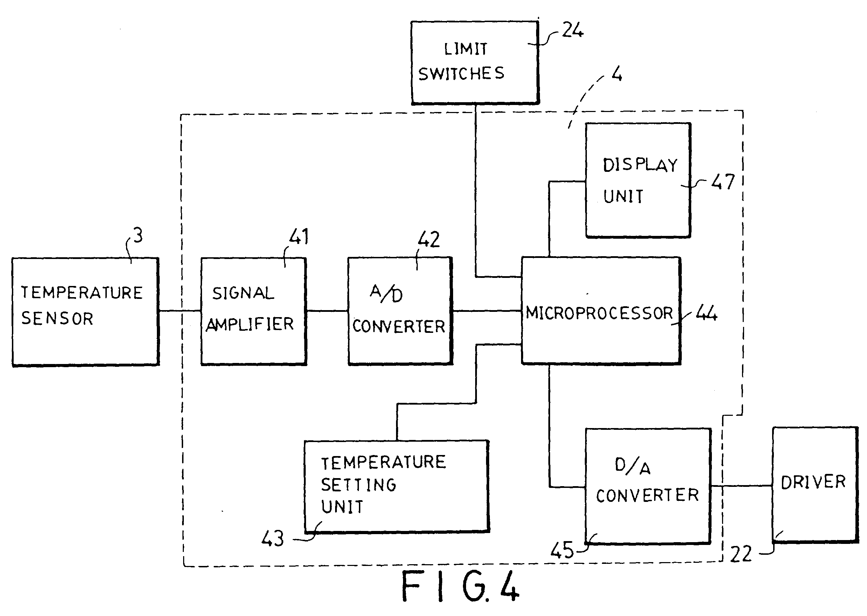

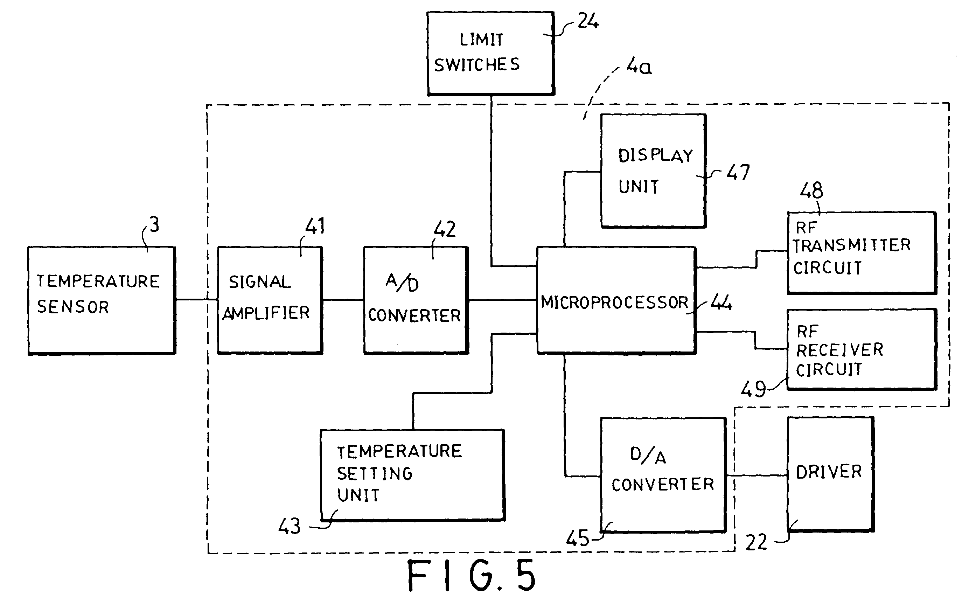

Figure 5 illustrates a modified driver control unit 4a according to the second preferred embodiment of an automatic water temperature control device of this invention. The driver control unit 4a is generally similar to that shown in Figure 4, except for the inclusion of a radio frequency (RF) transmitter circuit 48 and an RF receiver circuit 49, both of which are electrically connected to the microprocessor 44.

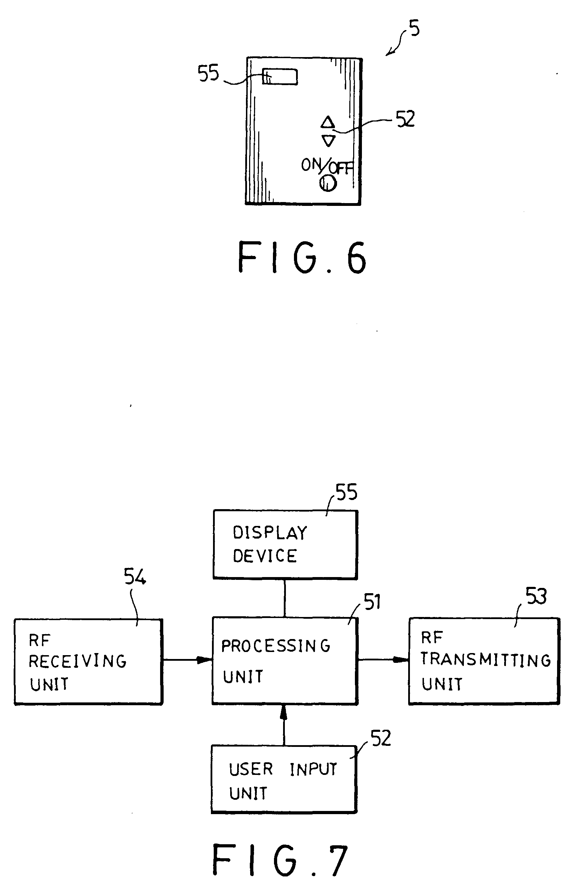

Figures 6 and 7 illustrate a handheld remote controller 5 of the second preferred embodiment. The remote controller 5 includes a processing unit 51 and a user input unit 52 electrically connected to the processing unit 51 and operable so as to set the desired water temperature. The user input unit 52 provides the reference temperature signal corresponding to the desired water temperature to the processing unit 51 when operated. The remote controller 5 further includes an RF transmitting unit 53 electrically connected to the processing unit 51 for wirelessly transmitting the reference temperature signal. The receiver circuit 49 of the driver control unit 4a (see Figure 5) receives the reference temperature signal from the remote controller 5. The operation thereafter is similar to that described beforehand and will not be repeated herein.

Referring again to Figure 5, the transmitter circuit 48 of the driver control unit 4a wirelessly transmits the actual temperature signal from the temperature sensor 3. As shown in Figures 6 and 7, the remote controller 5 further includes an RF receiving unit 54 electrically connected to the processing unit 51 for wirelessly receiving the actual temperature signal from the driver control unit 4a, and a display device 55 electrically connected to and controlled by the processing unit 51 so as to display the actual temperature of the water flowing through the mixed water outlet and the desired water temperature thereon.

The remote controller 5 facilitates automatic control of the device of this invention.

## Claims

1. An automatic water temperature control device for a mixing-type water valve (1), the water valve (1) including a valve housing (10) formed with a cold water inlet (11), a hot water inlet (12) and a mixed water outlet (13), the water valve (1) further including a valve piece unit (14) provided in the valve housing (10) and operable so as to control amounts of cold and hot water flowing from the cold and hot water inlets (11, 12) to the mixed water outlet (13) , and an operating unit (15) with an operating shaft (151) that extends into the valve housing (10) and that is coupled to the valve piece unit (14) to permit operation of the valve piece unit (14), the automatic water temperature control device being characterized by:
a rotation control unit (2) including a driver (22) with a drive shaft (221) that is adapted to be coupled operably to the operating shaft (151) for driving rotatably the operating shaft (151);
a temperature sensor (3) adapted to be mounted on the valve housing (10) , the temperature sensor (3) generating an actual temperature signal corresponding to actual temperature of water flowing through the mixed water outlet (13); and
a driver control unit (4) including a temperature setting unit (43) operable so as to set a desired water temperature and so as to generate a reference temperature signal corresponding to the desired water temperature, and processor means (44) electrically connected to the temperature sensor (3), the driver (22) and the temperature setting unit (43) , the processor means (44) comparing the actual temperature signal with the reference temperature signal and activating the driver (22) to drive rotatably the operating shaft (151) to control the amounts of the cold and hot water flowing from the cold and hot water inlets (11, 12) to the mixed water outlet (13) until the actual temperature of the water flowing through the mixed water outlet (13) reaches the desired water temperature.

2. The automatic water temperature control device of claim 1, characterized in that the driver control unit (4) further includes a display unit (47) electrically connected to and controlled by the processor means (44) so as to display the actual temperature of the water flowing through the mixed water outlet (13) and the desired water temperature thereon.

3. The automatic water temperature control device of claim 1, further characterized by a handheld remote controller (5) which includes a processing unit (51) and a user input unit (52) electrically connected to the processing unit (51) and operable so as to set the desired water temperature, the user input unit (52) providing the reference temperature signal corresponding to the desired water temperature to the processing unit (51) when operated, the remote controller (5) further including a transmitting unit (53) electrically connected to the processing unit (51) for wirelessly transmitting the reference temperature signal, the driver control unit (4a) further including a receiver circuit (49) electrically connected to the processor means (44) for wirelessly receiving the reference temperature signal from the remote controller (5).

4. The automatic water temperature control device of claim 3, characterized in that the driver control unit (4a) further includes a transmitter circuit (48) electrically connected to the processor means (44) for wirelessly transmitting the actual temperature signal, the remote controller (5) further including a receiving unit (54) electrically connected to the processing unit (51) for wirelessly receiving the actual temperature signal from the driver control unit (4), and a display device (55) electrically connected to and controlled by the processing unit (51) so as to display the actual temperature of the water flowing through the mixed water outlet (13) and the desired water temperature thereon.

5. The automatic water temperature control device of claim 1, characterized in that the rotation control unit (2) further includes a limit plate (23) formed with a circumferential notch (232), a pair of limit switches (24) mounted respectively on the limit plate (23) on two ends of the circumferential notch (232), and a limit shaft (25) having a first end adapted to be coupled to the operating shaft (151) for co-rotation therewith and a second end formed with a switch actuator (252) that extends into the circumferential notch (232), the switch actuator (252) abutting against a corresponding one of the limit switches (24) when the cold or hot water flow is at a maximum amount, the limit switches (24) being electrically connected to the processor means (44) and enabling the processor means (44) to stop further activation of the driver (22) when either of the cold or hot water flow is at the maximum amount.
